# EUROPEAN PATENT SPECIFICATION

(11) **EP 2 468 593 B1**
(45) Date of publication and mention of the grant of the patent: **27.07.2016**
(21) Application number: 11193352.9
(22) Date of filing: 13.12.2011
(51) Int. Cl.: B60T 7/12, B60T 17/18

(54) **Improvements in or relating to brake control**
Verbesserungen bei oder im Zusammenhang mit der Bremskontrolle
Améliorations de ou en relation avec le contrôle de freinage

(30) Priority: 22.12.2010 GB 201021663
(43) Date of publication of application: 27.06.2012
(73) Proprietor: Jaguar Land Rover Limited, Whitley Coventry CV3 4LF (GB)
(72) Inventor: Beever, Paul, Coventry, Warwickshire CV3 4LF (GB); Reynolds, Timothy, Coventry, Warwickshire CV3 4LF (GB)
(74) Representative: Ditum, Caroline Mary

(56) References cited:
- WO-A1-2005/042320
- DE-A1- 10 213 346
- DE-A1- 10 238 870
- US-A1- 2008 191 546

## Description

The present invention relates to brake control systems for motor vehicles and methods of braking motor vehicles. In particular, though not exclusively, it relates to such brake control systems and methods of braking, in which safety is enhanced after the vehicle is brought to a stationary state, i.e. standstill.

Brake control systems for motor vehicles are known, particularly in relation to the so-called service brakes of motor vehicles. Service brakes are the primary mechanism for slowing or stopping a motor vehicle and, as is known in the art, may take a variety of forms. Most commonly, service brakes are disc brakes and of the hydraulic type, acting on all wheels of the vehicle (i.e. typically four in the case of a motor car).

Motor vehicles are also required to have a mechanical parking brake (sometimes referred to as a handbrake), which is distinct from the service brakes. The parking brake functions primarily to hold the vehicle in standstill but also acts as an emergency brake, for example should there be a major failure with the service brake system.

The parking brake may take a variety of forms but is most commonly a disc brake of the mechanical type (actuated by cables). In many modern motor vehicles, the parking brake, though of the mechanical type, is controlled electronically, i.e. is operable with the help of a button, via an associated control module. Unlike the service brakes, the parking brake generally does not act on all wheels of the vehicle. For example, in the case of a motor car, it may exert a braking effort only on the wheels of the rear axle (i.e. two wheels).

Once a vehicle is in standstill, there is often an overlap between braking effort supplied by the service brakes and braking effort supplied by the parking brake. For example, the service brakes may hold the vehicle in standstill when the parking brake is engaged, but may subsequently be released when a driver leaves the vehicle.

In modern vehicles with brake control systems for the service brakes, holding of the vehicle by the service brakes need not necessarily result from direct driver input. It may also result from an automatic braking component supplied by the brake control system, possibly without any application of the brake pedal by the driver, for example to help the driver by preventing unwanted vehicle motion. Particularly where an electronic parking brake is used in such a vehicle, it can be difficult for a driver to know whether the vehicle is being held in standstill by the service brakes or by the parking brake. DE10213346 describes a system in which the service braking effort transitions automatically to the parking brake of a vehicle.

It has now been found that, in many cases, given that the service brakes and parking brake are typically separate systems supplying differing braking efforts, lack of feedback to the driver as described above represents a potential safety hazard. For example, when the vehicle is in a position where the service brakes are capable of maintaining standstill whilst the parking brake is not, the driver may assume that the vehicle is safely parked and exit the vehicle when the vehicle is in fact only held in standstill by the service brakes.

It is an object of the invention to overcome or mitigate the problems described above.

From a first aspect, the invention resides in a brake control system for a motor vehicle having wheels, service brakes for supplying a service braking effort to a plurality of the wheels, sensing means for detecting standstill of the vehicle, and a parking brake engageable to supply a park braking effort to a subset of the plurality of wheels, the system comprising: brake actuation means for actuating the service brakes to supply the service braking effort; and brake control means for controlling the brake actuation means to supply an automatic component of the service braking effort, wherein the brake control means is arranged, when standstill of the vehicle is detected and before the parking brake is engaged, to cause the brake actuation means to supply the automatic component of the service braking effort only to the subset of the plurality of wheels, the automatic component of the service braking effort not exceeding the park braking effort.

By "automatic component of the service braking effort" is meant a component of the service braking effort that does not correspond to a driver brake input. For example, the automatic component may be caused by the brake control means (by commanding the brake actuation means to maintain or increase braking effort) based on a programmed response to one or more vehicle conditions, e.g. vehicle movement or lack thereof, vehicle inclination angle, gear selection, and/or throttle application.

The automatic component may vary over time. At any given time, the automatic component may be the sole component of the service braking effort, may complement, or cooperate with, a driver input component of the service braking effort, or may be reduced to zero (e.g. while the driver input component is found to be sufficient to maintain standstill). To facilitate cooperation between the automatic component and the driver input component, the driver input component may be monitored or handled by the brake control means.

The plurality of wheels may preferably comprise four or more wheels. The term "subset" as used herein refers to a proper subset. Thus the subset of the plurality of wheels always comprises at least one wheel less than the plurality of wheels. Preferably, the subset of the plurality of wheels may comprise three or fewer wheels, e.g. two wheels.

Because, in standstill and before the parking brake is engaged, the automatic component of the service braking effort is supplied only to the subset of the plurality of wheels, the brake control system of the first aspect of the invention enhances safety and improves driver feedback. Specifically, the brake control system ensures that the driver is not given a false sense of security when the vehicle is held in standstill by the service brakes, particularly when there is no driver input component of the service braking effort. The driver experiences the effect of a braking effort supplied only to the subset of the plurality of wheels whilst still in control of the vehicle, before the parking brake is engaged.

The invention particularly improves safety in situations where a braking effort supplied to the plurality of wheels is sufficient to hold the vehicle in standstill, but a braking effort supplied to the subset of the plurality of wheels is not, for example because the vehicle is on a very steep slope and/or the subset of the plurality of wheels is supported on slippery ground.

More generally, it has been appreciated that, during standstill of the vehicle, the automatic component of the service braking effort should not exceed the park braking effort. Thus the brake control means may be arranged to ensure that, during standstill of the vehicle, the automatic component of the service braking effort does not exceed the park braking effort.

Furthermore, from a second aspect, the invention resides in a brake control system for a motor vehicle having wheels, service brakes for supplying a service braking effort to a plurality of the wheels, sensing means for detecting standstill of the vehicle, and a parking brake engageable to supply a park braking effort to a subset of the plurality of wheels, the system comprising: brake actuation means for actuating the service brakes to supply the service braking effort; and brake control means for controlling the brake actuation means to supply an automatic component of the service braking effort, wherein the brake control means is arranged, when standstill of the vehicle is detected and before the parking brake is engaged, to ensure that the automatic component of the service braking effort does not exceed the park braking effort. Preferably, the automatic component of the service braking effort may be supplied only to the subset of the plurality of wheels.

The following preferred and advantageous features relate to both the first and the second aspect of the invention.

Advantageously, the brake control means may be arranged to determine a first braking effort threshold suitable for holding the vehicle in standstill with service braking effort supplied only to the subset of the plurality of wheels. Conveniently, the brake control system may comprise sensing means for detecting a vehicle gradient (i.e. inclination angle) and the brake control means may be arranged to determine the first braking effort threshold based on a signal from the gradient sensing means. The first braking effort threshold may additionally be determined based on a vehicle gear selection and/or based on a vehicle load weight.

Preferably, the brake control means may be arranged, when the vehicle is in standstill, to adjust the automatic component of the service braking effort so that the service braking effort (supplied to the subset of the plurality of wheels according to the first aspect of the invention) is greater than or equal to the first braking effort threshold.

It will be appreciated that in some circumstances the vehicle gradient may make it impossible to determine a threshold suitable for holding the vehicle in standstill. In such a case the first threshold may optionally be set as maximum braking effort.

The brake control systems according to the first and second aspects may preferably further comprise a brake input for controlling (either directly or via the brake control means) the brake actuation means to supply a driver input component of the service braking effort to the plurality of wheels. The brake control means may advantageously be arranged, during standstill of the vehicle, to cause a variation in the automatic component of the service braking effort in response to a variation in the driver input component of the service braking effort.

Advantageously, the brake control means may be arranged to determine a second braking effort threshold suitable for holding the vehicle in standstill with service braking effort supplied to the plurality of wheels. The brake control means may then preferably be arranged to increase the automatic component of the service braking effort, most preferably to equal or exceed the first braking effort threshold, when a driver input component of the service braking effort supplied to the plurality of wheels falls below the second braking effort threshold.

As the objectives of the invention can be achieved within a limited timeframe, the supply of the automatic component of the service braking effort only to the subset of the plurality of wheels, and/or ensuring that the automatic component of the service braking effort does not exceed the park braking effort, need not be continuous. For example, the brake control means may be arranged to cause the above to occur only for a predetermined time period during standstill, such as 3 seconds or less. However, preferably the above may occur, either individually or in combination, at all times when standstill of the vehicle is detected.

To take maximum advantage of the safety benefits of the present invention, the brake actuation means and the parking brake may be distinct (i.e. actuated by separate mechanisms). Additionally or alternatively, the brake actuation means may be of the hydraulic type and/or the parking brake may be of the mechanical type.

Advantageously, the brake control means may be arranged to cease supply of the automatic component of the service brake effort after the parking brake is engaged. The brake control means may also preferably be arranged to cease supply of the automatic component of the service brake effort and/or disengage the parking brake in response to a driver accelerator input.

The brake control systems of the first and second aspects of the invention share the objective of providing a service braking effort that does not exceed, the park braking effort. Advantageously, the brake control systems, and in particular the brake control means, may be arranged to emulate the park braking effort in terms of overall vehicle retarding power.

From a third aspect, the invention resides in a method of braking a motor vehicle, the method comprising: applying a first service braking effort to a plurality of wheels of the vehicle to bring the vehicle to a standstill, applying a second service braking effort to a subset of the plurality of wheels to hold the vehicle in standstill, applying a park braking effort to the subset of the plurality of wheels, and releasing the second service braking effort. The second service braking effort advantageously does not exceed the park braking effort

The advantages and preferred features of the first and second aspect of the invention apply *mutatis mutandis* to the third aspect of the invention. For example the service braking effort may preferably be applied hydraulically and the park braking effort may preferably be applied mechanically.

The invention also extends to a motor vehicle comprising any of the brake control systems described herein or operated according to any method described herein.

Within the scope of this application it is envisaged that the various aspects, embodiments, examples, features and alternatives set out in the preceding paragraphs, in the claims and/or in the following description and drawings may be taken independently or in any combination thereof. Features described in connection with one embodiment are applicable to all embodiments except where there is incompatibility of features.

The invention will now be described by way of example with reference to the accompanying drawings in which:
Figure 1 is a schematic drawing of a brake control system for a motor vehicle in accordance with an embodiment of the present invention;
Figure 2 is a flowchart summarising steps taken by the brake control system of Figure 1 to determine whether a hydraulic vehicle hold is required according to one operational mode; and
Figure 3 is a flow chart summarising the steps taken by the brake control system of Figure 1 to implement the hydraulic vehicle hold when required according to Figure 2.

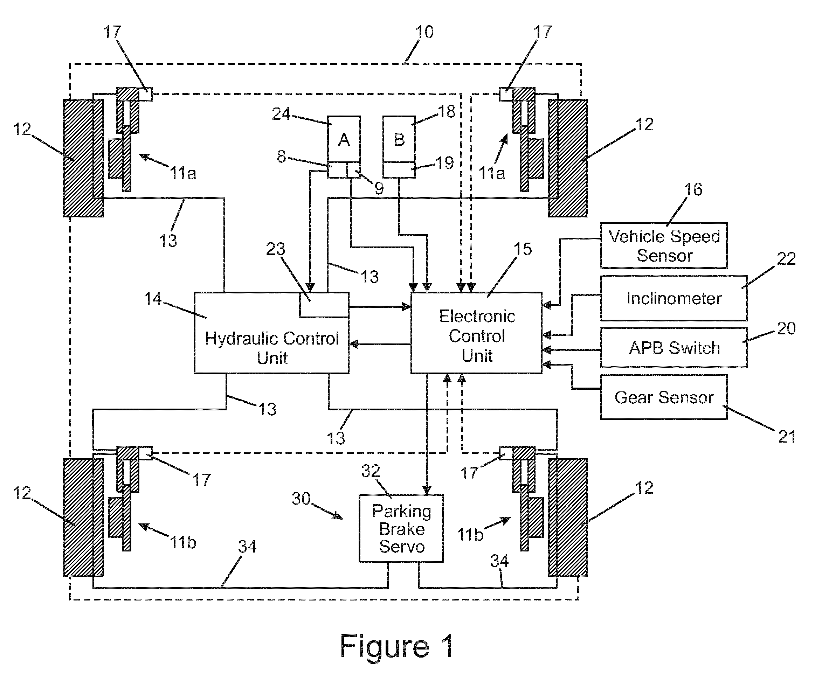

Referring to Figure 1, there is shown a motor vehicle 10 in a dashed outline with a brake control system according to an embodiment of the invention.

The brake control system is in an activated state for the purpose of the invention when an "Automatic Parking Brake" (APB) mode is activated, as will be described. By contrast, when the APB mode is deactivated, the brake control system is deactivated for the purpose of the invention. Irrespective of the APB activation state, the brake control system may additionally perform other brake functions not forming part of the invention, for example such those described in EP 0 784 551 B1 or EP 1 777 133 A1 to facilitate hill descent.

The brake control system includes in a conventional manner a brake arrangement with front axle disc brakes 11 a and rear axle disc brakes 11 b on four wheels 12. Each disc brake 11 a, 11 b is hydraulically operated through a hydraulic line 13 by a hydraulic control (HC) unit 14 which functions as a brake actuation means for actuating the disc brakes 11a, 11b to supply a service braking effort. The HC unit 14 is controlled by an electronic control (EC) unit 15, which functions as a brake control means for the service brakes 11 a 11 b.

Figure 1 is only a diagram of the most important functional components of the brake control system in accordance with the invention. Further details of the brake control system are described in EP 0 784 551 B1 and thus will not be further described.

The EC unit 15 receives a vehicle speed signal from movement sensing means in the form of a vehicle speed sensor 16, an individual wheel speed signal from a wheel speed sensor 17 on each wheel 12 and a driver demand signal from an accelerator (or throttle) pedal 18, which incorporates an accelerator pedal position sensor 19. The EC unit 15 also receives an APB signal from a driver APB activation switch 20, a gear signal from a drive gear sensor 21 and an inclination angle signal from a gradient sensing means, in this embodiment an inclinometer 22. The EC unit 15 receives a pedal braking signal from a brake light switch 9 on a brake pedal 24. The EC unit 15 may comprise a plurality of interconnected or integral modules (not shown).

The brake pedal 24 is also associated with a master cylinder 8, which is connected to a brake pressure sensor 23 forming part of the HC unit 14. The brake pressure sensor 23 is arranged to send a driver braking signal from the brake pressure sensor 23 to the EC unit 15, which is indicative of a driver input component of the service braking effort.

The EC unit 15 also controls an electronic parking brake 30, which is of a conventional mechanical type, comprising a parking brake servo 32 that operates a mechanical linkage 34 to engage the parking brake 30 to supply a park braking effort within the two rear disc brakes 11 b. An alternative embodiment (not shown) the mechanical linkage is operated to supply the park braking effort by actuating a braking shoe within a separate mechanical drum brake unit mounted inside the rear rotors. In yet another alternative embodiment (not shown) each disc brake 11 a, 11 b comprises a calliper that includes an integrated electric motor performing the role of the parking brake based on commands from an electronic controller (which may optionally be a module of the EC unit 15).

The EC unit 15 is active to control the HC unit 14 and the parking brake 30 when the APB switch 20 is switched on by the driver to select APB mode. The EC unit 15 controls the HC unit 14 in conjunction with driver input from the brake pedal 24, by supplying an automatic component of the service braking effort as needed. Similarly, the EC unit 15 controls the parking brake 30 in conjunction with a manual parking brake engage/release input, which the driver may provide via a suitable switch (not shown).

When APB mode is active, the brake control system, specifically the EC unit 15, is configured to engage the parking brake 30 automatically when the vehicle is in standstill, by sending an engage signal to the servo 32. Specifically, the EC unit 15 is configured to engage the parking brake 30 to supply a park braking effort after the vehicle is detected to have been stationary for a period of around two minutes.

In APB mode the EC unit 15 also handles automatic release of the parking brake 30. Thus, when the EC unit 15 receives a driver demand signal showing that the accelerator pedal 18 is depressed by the driver, it releases the parking brake by sending a release signal to the servo 32.

During the two minutes before the parking brake is engaged, the EC unit 15 provides a hydraulic vehicle hold by ensuring, through the addition of an automatic service brake component as necessary, that the HC unit 14 supplies a braking effort that maintains the vehicle in standstill, unless the driver presses the accelerator pedal 18, e.g. to pull away.

As aforesaid, the parking brake 30 acts on the two rear wheels of the vehicle, whilst the service brakes (disc brakes 11 a, 11 b as controlled by the HC unit 14) act on all four wheels of the vehicle. To enhance safety and to improve driver feedback in relation to parking brake engagement, the EC unit 15 is configured to cause the HC unit 14 to supply any automatic component of the service braking effort to the rear axle disc brakes 11 b only, i.e. not in the front axle disc brakes 11 a, when standstill of the vehicle is detected. In this manner, once the brake pedal is released, the service brakes emulate the park braking effort before the parking brake 30 is engaged, thereby providing the driver with early feedback regarding the effectiveness of the park braking effort.

Since the HC unit 14 uses hydraulic pressure to control the disc brakes 11a, 11b, the braking effort caused by the HC unit 14 at each brake 11 a, 11 b is equivalent to the relevant hydraulic brake pressure.

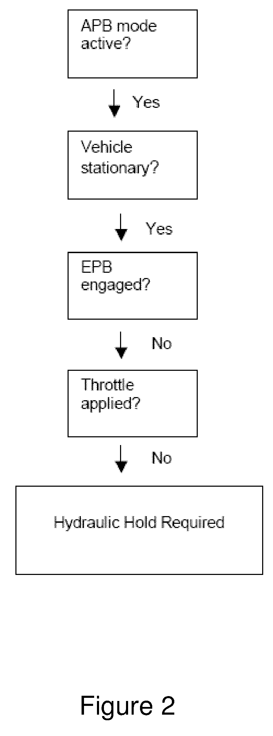

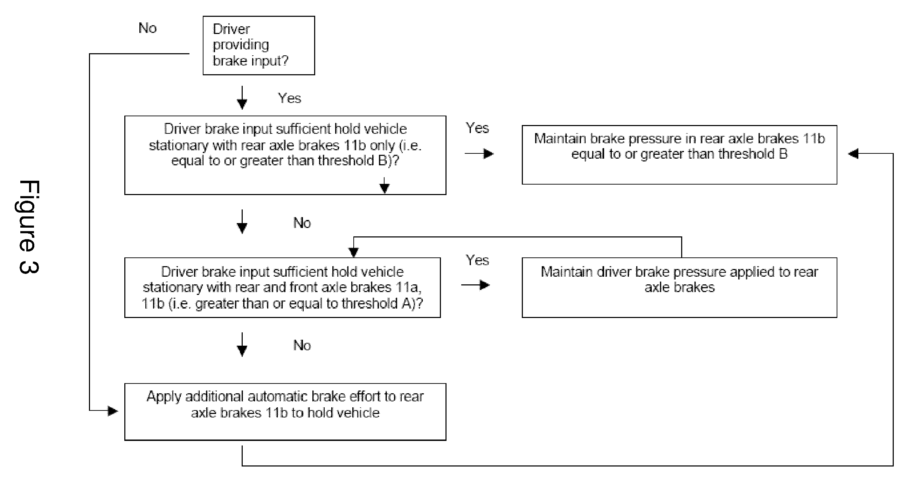

An exemplary operational mode of the brake control system will now be described with reference to the flowchart of Figures 2 and 3.

Figure 2 illustrates how the EC unit 15 of the brake control system determines whether hydraulic vehicle hold is required. Assuming that APB is active and, before taking steps to ensure hydraulic vehicle hold, the EC unit 15 checks that (i) based on a signal from the vehicle speed sensor 16, the vehicle is in standstill, (ii) the electronic parking brake (EPB) 30 is not engaged, and (iii) based on the driver demand signal from the accelerator pedal 18, the accelerator pedal is not being pressed. If these conditions are met, the EC unit 15 proceeds to ensure hydraulic vehicle hold as will be described later with reference to Figure 3. In the meantime, the EC unit continues to monitor the conditions.

If the vehicle speed sensor indicates to the EC unit 15 that the vehicle is moving then the brake control system does not proceed to initiate hydraulic hold as described in Figure 3. However to enhance safety, the EC unit 15 is configured to continue to attempt hydraulic hold, or at least to limit vehicle speed or acceleration to a predetermined limit using all the service brakes 11 a 11 b, when the vehicle is detected to be moving despite an ongoing attempt to hold the vehicle stationary, i.e. if hydraulic vehicle hold is failing, e.g. due to a very steep slope.

Hydraulic vehicle hold is ceased if the EC unit 15 has engaged the parking brake 30, i.e. typically after the period of two minutes, or if the driver engages the parking brake manually.

The EC unit 15 also sends a command to the HC unit 14 to cease hydraulic vehicle hold as soon as it receives a driver demand signal indicating that the accelerator pedal 18 is being pressed. In an alternative mode of operation, to facilitate hill starts, a torque threshold is set (based on applied throttle, selected gear and vehicle inclination angle) at which the EC unit 15 ceases hydraulic vehicle hold.

Referring now to Figure 3, in summary, as long as the EC unit 15 determines that hydraulic vehicle hold is required (according to the conditions described above in relation to Figure 2) the EC unit 15 causes the HC unit 14 to supply an automatic component of the service braking effort, to supplement driver input as necessary. The automatic component of the service braking effort is supplied only in the rear axle disc brakes 11 b, either by maintaining existing hydraulic pressure (e.g. through valve closure) or by generating new hydraulic pressure. Notably the EC unit 15 does not cause the HC unit 14 to supply any automatic component of the service braking effort in the front axle disc brakes 11 a.

To be able to supplement any driver input hydraulic vehicle hold with an automatic service braking effort as necessary, the EC unit 15 determines continuously the following overall braking effort (i.e. hydraulic pressure) thresholds:
Threshold A - the effort needed in each of the four disc brakes 11a, 11b to hold the vehicle in standstill in its current gear (as detected by the drive gear sensor 21) at its current inclination angle (as detected by the inclinometer 22) using all four service brakes 11 a, 11 b; and
Threshold B - the effort needed in the two rear axle disc brakes 11 b to hold the vehicle in standstill in its current gear (as detected by the drive gear sensor 21) at its current inclination angle (as detected by the inclinometer 22) using only the two rear axle service brakes 11 b.

With these thresholds known, as shown in Figure 3, the EC unit 15 determines firstly, based on a signal from the brake pressure sensor 23, whether the driver is applying any braking effort via the brake pedal 24. If the driver is applying no braking effort then the EC unit 15 causes the HC unit 14 to supply an automatic service braking effort (i.e. hydraulic pressure) at the rear disc brakes 11 b at threshold B. This effort is maintained until hydraulic vehicle hold ends, either because the accelerator pedal 18 is pressed or because the parking brake 30 is engaged.

If the EC unit 15 determines from the brake pressure sensor 23 that the driver is applying a braking effort via the brake pedal 24, i.e. that there is an existing driver input component of the service braking effort, then the EC unit 15 determines whether the driver input component is greater than or equal to threshold B. The EC unit 15 allows the service braking effort to follow brake pedal input as long as the effort remains equal to or above threshold B and continues to monitor the brake pressure sensor 23. The service braking effort comprises no automatic component in this case.

If the driver input component applied by the driver is below threshold B, the EC unit 15 maintains the braking effort in the rear service brakes 11 b. Specifically, if the driver alters the driver input component in this situation, the EC unit 15 allows the service braking effort in the rear service brakes to equal the driver input component only as long as the braking effort is increased (until threshold B is reached - for which see above). If the driver reduces the input braking effort then the EC unit 15 causes the HC unit 14 to maintain the braking effort in the rear axle service brakes 11 b as a (partially) automatic component of the service braking effort. Furthermore, if the applied braking effort drops below threshold A, the EC unit 15 causes the HC unit 14 to generate additional automatic braking effort in the rear axle service brakes 11 b to further increase the automatic component of the service braking effort, until threshold B is reached.

The operational mode described above enhances safety because, in standstill and before the parking brake is engaged, the automatic component of the service braking effort is supplied only to the rear axle wheels. The driver is not given a false sense of security when the vehicle is held in standstill by the service brakes, particularly when there is no driver input component of the service braking effort. The driver experiences the effect of a braking effort supplied only to the subset of the plurality of wheels whilst still in control of the vehicle, before the parking brake is engaged.

## Claims

1. A brake control system for a motor vehicle having wheels (112), service brakes (11 a, 11 b) for supplying a service braking effort to a plurality of the wheels (112), sensing means (16) for detecting standstill of the vehicle, and a parking brake (30) engageable to supply a park braking effort to a subset of the plurality of wheels (12), the system comprising: brake actuation means (14) for actuating the service brakes (11a, 11 b) to supply the service braking effort; and brake control means (15) for controlling the brake actuation means (14) to supply an automatic component of the service braking effort, wherein the brake control means (15) is arranged, when standstill of the vehicle is detected and before the parking brake (30) is engaged, to cause the brake actuation means (14) to supply the automatic component of the service braking effort only to the subset of the plurality of wheels (12), **characterized in that** the automatic component of the service braking effort not exceeding the park braking effort.

2. The brake control system of claim 1 wherein the brake control means (15) is arranged to determine a first braking effort threshold suitable for holding the vehicle in standstill with service braking effort supplied only to the subset of the plurality of wheels (12).

3. The brake control system of claim 2 further comprising gradient sensing means (22) for detecting a vehicle gradient and wherein the brake control means (15) is arranged to determine the first braking effort threshold based on a signal from the gradient sensing means (22).

4. The brake control system of claim 2 or claim 3 wherein the brake control means (15) is arranged, when the vehicle is in standstill, to adjust the automatic component of the service braking effort so that the service braking effort supplied to the subset of the plurality of wheels (12) is greater than or equal to the first braking effort threshold.

5. The brake control system of any preceding claim further comprising a brake input for controlling the brake actuation means (14) to supply a driver input component of the service braking effort to the plurality of wheels (12) and wherein the brake control means (15) is arranged, during standstill of the vehicle, to cause a variation in the automatic component of the service braking effort in response to a variation in the driver input component.

6. The brake control system of any preceding claim wherein the brake control means (14) is arranged to determine a second braking effort threshold suitable for holding the vehicle in standstill with service braking effort supplied to the plurality of wheels (12).

7. The brake control system of claim 6 wherein the brake control means (15) is arranged to increase the automatic component of the service braking effort when a driver input component of the service braking effort supplied to the plurality of wheels (12) falls below the second braking effort threshold.

8. The brake control system of any preceding claim wherein any automatic component of the service braking effort is supplied only to the subset of the plurality of wheels (12) at all times when standstill of the vehicle is detected.

9. The brake control system of any preceding claim wherein the brake actuation means (14) and the parking brake (30) are distinct, with the brake actuation means (14) being of the hydraulic type and the parking brake (30) being of the mechanical type.

10. A brake control system for a motor vehicle having wheels (12), service brakes (11 a, 11 b) for supplying a service braking effort to a plurality of the wheels (12), sensing means (16) for detecting standstill of the vehicle, and a parking brake (30) engageable to supply a park braking effort to a subset of the plurality of wheels (12), the system comprising: brake actuation means (14) for actuating the service brakes (11 a, 11 b) to supply the service braking effort; and brake control means (15) for controlling the brake actuation means (14) to supply an automatic component of the service braking effort, **characterized in that** the brake control means (15) is arranged, when standstill of the vehicle is detected and before the parking brake (30) is engaged, to ensure that the automatic component of the service braking effort does not exceed the park braking effort.

11. A method of braking a motor vehicle, the method comprising: applying a first service braking effort to a plurality of wheels (12) of the vehicle to bring the vehicle to a standstill, applying a second service braking effort to a subset of the plurality of wheels (12) to hold the vehicle in standstill, applying a park braking effort to the subset of the plurality of wheels (12), and releasing the second service braking effort, **characterized in that** the second service braking effort does not exceed the park braking effort.

12. The method of claim 11 wherein the service braking effort is applied hydraulically and the park braking effort is applied mechanically.

13. A motor vehicle comprising a brake control system according to any one of claims 1 to 11.

## Patentansprüche

1. Bremssteuersystem für ein Kraftfahrzeug mit Rädern (112), Betriebsbremsen (11a, 11 b) zum Zuführen einer Betriebsbremskraft an mehrere der Räder (112), Erfassungsmittel (16) zum Erkennen eines Stillstands des Fahrzeugs und einer Feststellbremse (30), die betätigt werden kann, um eine Feststellbremskraft einer Teilmenge der mehreren Räder (12) zuzuführen, wobei das System Folgendes umfasst: Bremsbetätigungsmittel (14) zum Betätigen der Betriebsbremsen (11 a, 11 b), um die Betriebsbremskraft zuzuführen; und Bremssteuermittel (15) zum Steuern der Bremsbetätigungsmittel (14), um eine automatische Komponente der Betriebsbremskraft zuzuführen, wobei das Bremssteuermittel (15) angeordnet ist, wenn ein Stillstand des Fahrzeugs erkannt wird und bevor die Feststellbremse (30) betätigt wird, zu bewirken, dass die Bremsbetätigungsmittel (14) die automatische Komponente der Betriebsbremskraft nur der Teilmenge der mehreren Räder (12) zuführt, **dadurch gekennzeichnet, dass** die automatische Komponente der Betriebsbremskraft die Feststellbremskraft nicht übersteigt.

2. Bremssteuersystem nach Anspruch 1, wobei das Bremssteuermittel (15) angeordnet ist, einen ersten Bremskraftschwellenwert zu bestimmen, der geeignet ist, das Fahrzeug in einem Stillstand zu halten, wobei die Betriebsbremskraft nur der Teilmenge der mehreren Räder (12) zugeführt wird.

3. Bremssteuersystem nach Anspruch 2, ferner umfassend Neigungserfassungsmittel (22) zum Erkennen einer Fahrzeugneigung und wobei das Bremssteuermittel (15) angeordnet ist, den ersten Bremskraftschwellenwert auf der Grundlage eines Signals von den Neigungserfassungsmitteln (22) zu bestimmen.

4. Bremssteuersystem nach Anspruch 2 oder 3, wobei das Bremssteuermittel (15) angeordnet ist, wenn sich das Fahrzeug im Stillstand befindet, die automatische Komponente der Betriebsbremskraft derart anzupassen, dass die Betriebsbremskraft, die der Teilmenge der mehreren Räder (12) zugeführt wird, größer als oder gleich wie der erste Bremskraftschwellenwert ist.

5. Bremssteuersystem nach einem der vorhergehenden Ansprüche, ferner umfassend eine Bremseingabe zum Steuern der Bremsbetätigungsmittel (14), um eine Fahrereingabekomponente der Betriebsbremskraft den mehreren Rädern (12) zuzuführen und wobei das Bremssteuermittel (15) angeordnet ist, als Reaktion auf eine Variation in der Fahrerantriebskomponente während des Stillstands des Fahrzeugs eine Variation in der automatischen Komponente der Betriebsbremskraft zu verursachen.

6. Bremssteuersystem nach einem der vorhergehenden Ansprüche, wobei das Bremssteuermittel (14) angeordnet ist, einen zweiten Bremskraftschwellenwert zu bestimmen, der geeignet ist, das Fahrzeug in einem Stillstand zu halten, wobei die Betriebsbremskraft nur der Teilmenge der mehreren Räder (12) zugeführt wird.

7. Bremssteuersystem nach Anspruch 6, wobei das Bremssteuermittel (15) angeordnet ist, die automatische Komponente der Betriebsbremskraft zu steigern, wenn eine Fahrereingabekomponente der Betriebsbremskraft, die den mehreren Rädern (12) zugeführt wird, unter den zweiten Bremskraftschwellenwert sinkt.

8. Bremssteuersystem nach einem der vorhergehenden Ansprüche, wobei eine beliebige automatische Komponente der Betriebsbremskraft stets nur der Teilmenge der mehreren Räder (12) zugeführt wird, wenn ein Stillstand des Fahrzeugs erkannt wird.

9. Bremssteuersystem nach einem der vorhergehenden Ansprüche, wobei die Bremsbetätigungsmittel (14) und die Feststellbremse (30) verschieden sind, wobei die Bremsbetätigungsmittel (14) vom hydraulischen Typ sind und die Feststellbremse (30) vom mechanischen Typ ist.

10. Bremssteuersystem für ein Kraftfahrzeug mit Rädern (12), Betriebsbremsen (11 a, 11 b) zum Zuführen einer Betriebsbremskraft an mehrere der Räder (12), Erfassungsmittel (16) zum Erkennen eines Stillstands des Fahrzeugs und einer Feststellbremse (30), die betätigt werden kann, um eine Feststellbremskraft einer Teilmenge der mehreren Räder (12) zuzuführen, wobei das System Folgendes umfasst: Bremsbetätigungsmittel (14) zum Betätigen der Betriebsbremsen (11 a, 11 b), um die Betriebsbremskraft zuzuführen; und Bremssteuermittel (15) zum Steuern der Bremsbetätigungsmittel (14) zum Zuführen einer automatischen Komponente der Betriebsbremskraft, **dadurch gekennzeichnet, dass** das Bremssteuermittel (15) angeordnet ist, wenn ein Stillstand des Fahrzeugs erkannt wird und bevor die Feststellbremse (30) betätigt wird, sicherzustellen, dass die automatische Komponente der Betriebsbremskraft die Feststellbremskraft nicht übersteigt.

11. Verfahren zum Bremsen eines Kraftfahrzeugs, wobei das Verfahren Folgendes umfasst: Anwenden einer ersten Betriebsbremskraft auf mehrere Räder (12) des Fahrzeugs, um das Fahrzeug zu einem Stillstand zu bringen, Anwenden einer zweiten Betriebsbremskraft auf eine Teilmenge der mehreren Räder (12), um das Fahrzeug in einem Stillstand zu halten, Anwenden einer Feststellbremskraft auf die Teilmenge der mehreren Räder (12) und Lösen der zweiten Betriebsbremskraft, **dadurch gekennzeichnet, dass** die zweite Betriebsbremskraft die Feststellbremskraft nicht übersteigt.

12. Verfahren nach Anspruch 11, wobei die Betriebsbremskraft hydraulisch angewendet wird und die Feststellbremskraft mechanisch angewendet wird.

13. Kraftfahrzeug, umfassend ein Bremssteuersystem nach einem der Ansprüche 1 bis 11.

## Revendications

1. Système de commande de frein pour un véhicule motorisé ayant des roues (112), des freins de service (11 a, 11 b) pour fournir un effort de freinage de service à une pluralité des roues (112), un moyen de détection (16) pour détecter une immobilisation du véhicule et un frein de stationnement (30) pouvant être mis en prise pour fournir un effort de freinage de stationnement à un sous-ensemble de la pluralité de roues (12), le système comprenant : un moyen d'actionnement de frein (14) pour actionner les freins de service (11 a, 11 b) pour qu'ils fournissent l'effort de freinage de service ; et un moyen de commande de frein (15) pour commander au moyen d'actionnement de frein (14) de fournir une composante automatique de l'effort de freinage de service, dans lequel le moyen de commande de frein (15) est conçu, lorsqu'une immobilisation du véhicule est détectée et avant de mettre en prise le frein de stationnement (30), pour amener le moyen d'actionnement de frein (14) à fournir la composante automatique de l'effort de freinage de service uniquement au sous-ensemble de la pluralité de roues (12), **caractérisé en ce que** la composante automatique de l'effort de freinage de service ne dépasse pas l'effort de freinage de stationnement.

2. Système de commande de frein selon la revendication 1, dans lequel le moyen de commande de frein (15) est conçu pour déterminer un premier seuil d'effort de freinage adapté pour conserver le véhicule immobilisé avec un effort de freinage de service fourni uniquement au sous-ensemble de la pluralité de roues (12).

3. Système de commande de frein selon la revendication 2, comprenant en outre un moyen de détection de pente (22) pour détecter une pente de véhicule et dans lequel le moyen de commande de frein (15) est conçu pour déterminer le premier seuil d'effort de freinage d'après un signal provenant du moyen de détection de pente (22).

4. Système de commande de frein selon la revendication 2 ou la revendication 3, dans lequel le moyen de commande de frein (15) est conçu, lorsque le véhicule est immobilisé, pour ajuster la composante automatique de l'effort de freinage de service de sorte que l'effort de freinage de service fourni au sous-ensemble de la pluralité de roues (12) soit supérieur ou égal au premier seuil d'effort de freinage.

5. Système de commande de frein selon l'une quelconque des revendications précédentes, comprenant en outre une entrée de frein pour commander au moyen d'actionnement de frein (14) de fournir une composante d'entrée conducteur de l'effort de freinage de service à la pluralité de roues (12) et dans lequel le moyen de commande de frein (15) est conçu, pendant une immobilisation du véhicule, pour provoquer une variation de la composante automatique de l'effort de freinage de service en réponse à une variation de la composante d'entrée conducteur.

6. Système de commande de frein selon l'une quelconque des revendications précédentes, dans lequel le moyen de commande de frein (14) est conçu pour déterminer un second seuil d'effort de freinage adapté pour conserver le véhicule immobilisé avec un effort de freinage de service fourni à la pluralité de roues (12).

7. Système de commande de frein selon la revendication 6, dans lequel le moyen de commande de frein (15) est conçu pour augmenter la composante automatique de l'effort de freinage de service lorsqu'une composante d'entrée conducteur de l'effort de freinage de service fourni à la pluralité de roues (12) tombe en dessous du second seuil d'effort de freinage.

8. Système de commande de frein selon l'une quelconque des revendications précédentes, dans lequel toute composante automatique de l'effort de freinage de service est fournie uniquement au sous-ensemble de la pluralité de roues (12) à tout moment lorsqu'une immobilisation du véhicule est détectée.

9. Système de commande de frein selon l'une quelconque des revendications précédentes, dans lequel le moyen d'actionnement de frein (14) et le frein de stationnement (30) sont distincts, le moyen d'actionnement de frein (14) étant du type hydraulique et le frein de stationnement (30) étant du type mécanique.

10. Système de commande de frein pour un véhicule motorisé ayant des roues (12), des freins de service (11 a, 11 b) pour fournir un effort de freinage de service à une pluralité des roues (12), un moyen de détection (16) pour détecter une immobilisation du véhicule et un frein de stationnement (30) pouvant être mis en prise pour fournir un effort de freinage de stationnement à un sous-ensemble de la pluralité de roues (12), le système comprenant : un moyen d'actionnement de frein (14) pour actionner les freins de service (11 a, 11 b) pour qu'ils fournissent l'effort de freinage de service ; et un moyen de commande de frein (15) pour commander au moyen d'actionnement de frein (14) de fournir une composante automatique de l'effort de freinage de service, **caractérisé en ce que** le moyen de commande de frein (15) est conçu, lorsqu'une immobilisation du véhicule est détectée et avant de mettre en prise le frein de stationnement (30), pour garantir que la composante automatique de l'effort de freinage de service ne dépasse pas l'effort de freinage de stationnement.

11. Procédé de freinage d'un véhicule motorisé, le procédé comprenant : l'application d'un premier effort de freinage de service à une pluralité de roues (12) du véhicule pour amener le véhicule à s'immobiliser, l'application d'un second effort de freinage de service à un sous-ensemble de la pluralité de roues (12) pour conserver le véhicule immobilisé, l'application d'un effort de freinage de stationnement au sous-ensemble de la pluralité de roues (12) et le relâchement du second effort de freinage de service, **caractérisé en ce que** le second effort de freinage de service ne dépasse pas l'effort de freinage de stationnement.

12. Procédé selon la revendication 11, dans lequel l'effort de freinage de service est appliqué hydrauliquement et l'effort de freinage de stationnement est appliqué mécaniquement.

13. Véhicule motorisé comprenant un système de commande de frein selon l'une quelconque des revendications 1 à 11.
